# EUROPEAN PATENT APPLICATION

(11) **EP 3 199 611 A1**
(43) Date of publication of application: **02.08.2017**
(21) Application number: 15843066.0
(22) Date of filing: 16.02.2015
(51) Int. Cl.: C10L 5/40

(54) **PELLET PREPARATION SYSTEM AND PREPARATION METHOD USING BIOMASS**

(30) Priority: 25.09.2014 KR 20140128577; 29.01.2015 KR 20150013976
(71) Applicant: Ko, Jong Seong, Incheon 405-810 (KR)
(72) Inventor: Ko, Jong Seong, Incheon 405-810 (KR)
(74) Representative: Spengler, Robert
(86) International application number: PCT/KR2015/001560
(87) International publication number: WO 2016/047877

(57) **Abstract**

Disclosed is a method for manufacturing biomass pellets using biomass that includes food waste, human and animal excrement, and waste wood. The method performs a separation process for removing scrap metals and plastic materials from raw waste before the raw waste undergoes a pellet formation process. The pellet formation process includes: preparing a biomass mixture composed of 10 wt% of inorganic waste particles, 30 wt% of organic waste particles, 50 wt% of coal and graphite, and 10 wt% of red clay; applying a deasphalted oil mixture to the mixture while the mixture is being extruded by an extruder; coating the extruded mixture with a coating agent composed of asphalt and coal; molding the extruded mixture to take a predetermined form; and cutting the molded mixture into pellets having a predetermined size.

## Description

### Technical Field

The present invention relates to a system and method for manufacturing biomass pellets using biomass, which is organic matter such as food waste discharged from households and restaurants, human and animal excrement, and waste wood, the biomass being obtained by removing scrap metals, plastic waste, and plastic bags used to pack all kinds of general waste or food waste from collected raw waste.

### Background Art

With increasingly growing concerns over energy and environmental issues, interest in biomass has surged. Biomass sources such as waste, crops, and agricultural residues that are often found in everyday working and living environments are considered a practical alternative energy source to solve energy and environmental problems. Biomass refers to organic matter that exists in nature. Biomass is one of representative resources which have been used as food, energy, and daily supplies for many years. However, its value was not adequately appreciated in the past because of the attention focused on fossil fuels. However, biomass is nowadays appreciated to have a great potential as an alternative petrochemical as well as an alternative energy source.

Examples of biomass include microorganisms, animals, plants, byproducts of everyday human activities, general waste, and so on. Specifically, crops, woods (waste wood and lumber), animal excrement, food waste, organic wastewater, sewage, and sludge are representatives of the biomass.

Biomass (such as waste wood or sludge) and scrap paper sludge have high water content. For example, waste wood has water content of about 20 wt% or higher, and scrap paper sludge has water content of about 70 wt% or higher. Therefore, in order to recycle waste wood or scrap paper sludge as a solid fuel, the waste wood or scrap paper sludge needs to undergo pulverization and dehydration processes. Dehydration is performed using a dehydrator or through hot air drying (or natural drying). However, such dehydration methods have limited dehydration performance. That is, it is difficult to reduce the water content with a high dehydration rate. Furthermore, it takes a long time to lower the water content.

In addition, unprocessed biomass generally has a high volume due to its high porosity. This feature deteriorates transportation efficiency and the caloric value of biomass. Therefore, it is required to develop a technology for converting biomass into value-added products.

There are a few conventional methods for using biomass as an energy source. Examples of the conventional method include calcination of carbohydrate, pellet formation, and ogalite (briquet) formation. Pellets or ogalite are compacted fuels that have good transportability and combustibility. They are obtained by evaporating free water contained in wood.

However, conventional wood-based solid fuels are inferior to coal or coke in terms of caloric value and hardness. Therefore, when they are combusted along with coal or coke in cast-iron ware production and iron manufacturing plants, they cannot endure the conditions in a furnace and are destroyed. Therefore, they cannot be used as an alternative to cokes.

Aside from wood-based biomass, there are plant-based biomass (grass, sunflower, and so on) and food waste-based biomass (dregs, rice husks, and so one), both of which have high water content and large pores. Due to the disadvantages, plant-based biomass and food waste-based biomass are not proper to be recycled into solid fuels. For this reason, these have not been recycled but are disposed. Therefore, development for a technology for effectively using such kinds of biomass is required.

When manufacturing biomass pellets using wood-, plant-, food waste-based biomass, plastic materials such as plastic waste or plastic bags that are commonly used to hold food waste have to be removed so as not to be included in the biomass. However, removal of the plastic materials is not easy and deteriorates manufacturing efficiency of biomass pellets.

### Disclosure

### Technical Problem

Accordingly, the present invention has been made keeping in mind the above problems occurring in the related art, and an object of the present invention is to propose a technology for obtaining solid fuel pellets with high heat efficiency from biomass such as food waste, human and animal excrement, rice husks, saw dust, or waste wood.

Another object of the invention is to propose a technology for improving reliability of biomass pellets by preliminarily removing scrap metals and plastic waste included in raw waste and for increasing work efficiency when manufacturing biomass pellets.

### Technical Solution

In order to achieve the above object, according to aspects of the present invention, there are provided a system and method for manufacturing biomass pellets. The technology of the present invention preliminarily removes scrap metals or plastic waste from raw waste before introducing raw waste into a biomass pellet manufacturing system.

### Advantageous Effects

According to the present invention, it is possible to produce a solid fuel taking the form of pellets using biomass that is obtained from various kinds of waste generated in our everyday working and living environments. According to the present invention, it is possible to increase heat efficiency and combustibility of biomass pellets serving as a solid fuel. Therefore, it is expected that biomass pellets with high combustion efficiency can be obtained.

According to the present invention, scrap metals or plastic waste included in raw waste (biomass) are preliminarily removed. This increases manufacturing efficiency and reliability of biomass pellets.

### Description of Drawings

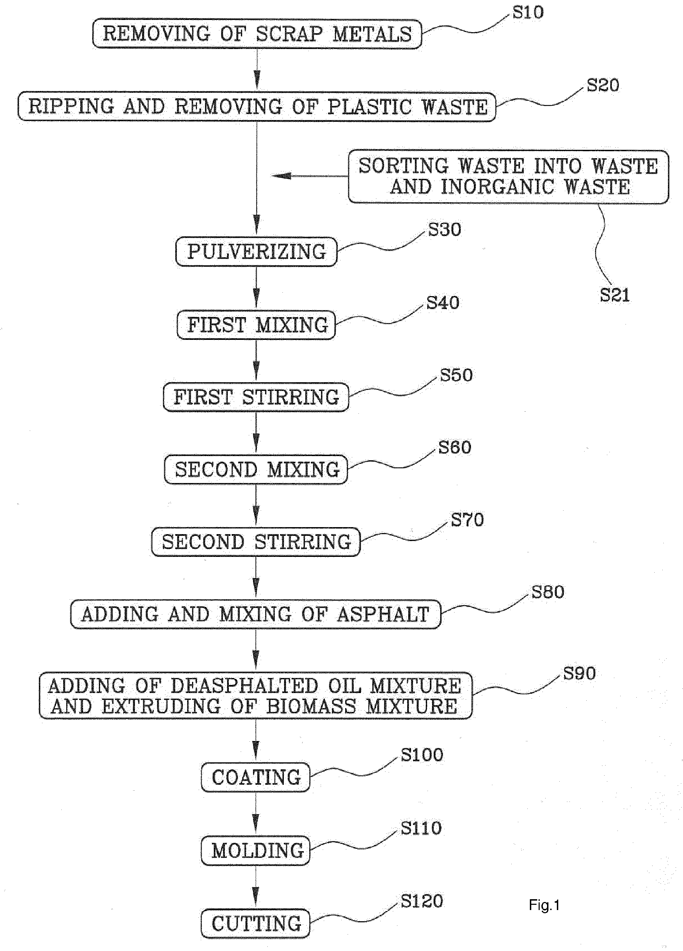

FIG. 1 is a flowchart illustrating a method for manufacturing biomass pellets;
FIG. 2 is a diagram illustrating a pretreatment apparatus used in the method for manufacturing biomass pellets according to the present invention;
FIG. 3 is diagram illustrating an organic-and-inorganic waste sorter that sorts waste into organic waste and inorganic waste and is used in the method for manufacturing biomass pellets according to the present invention;

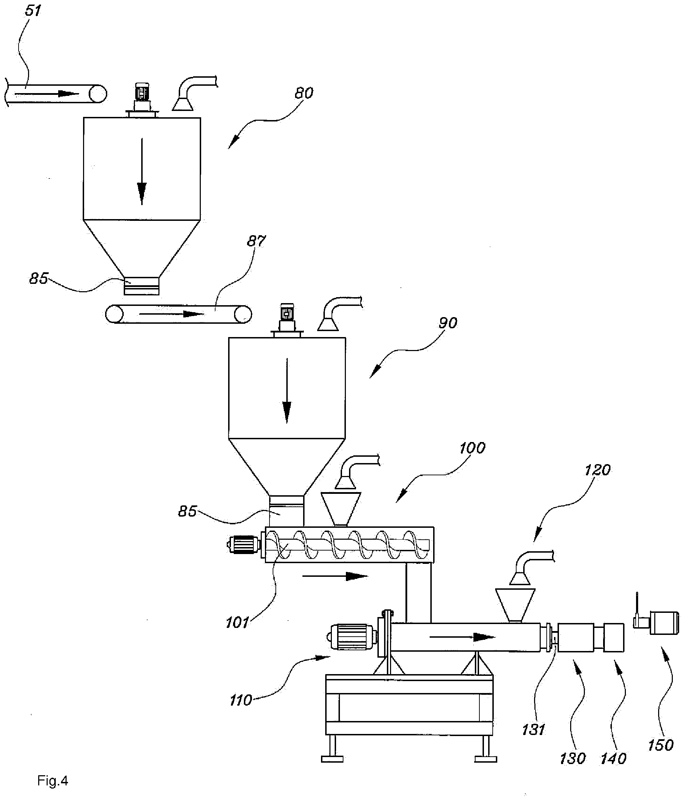

FIG. 4 is a diagram illustrating a mixer and stirrer that mixes and stirs organic waste or inorganic waste discharged from the pretreatment apparatus of FIG. 2 or FIG. 3;

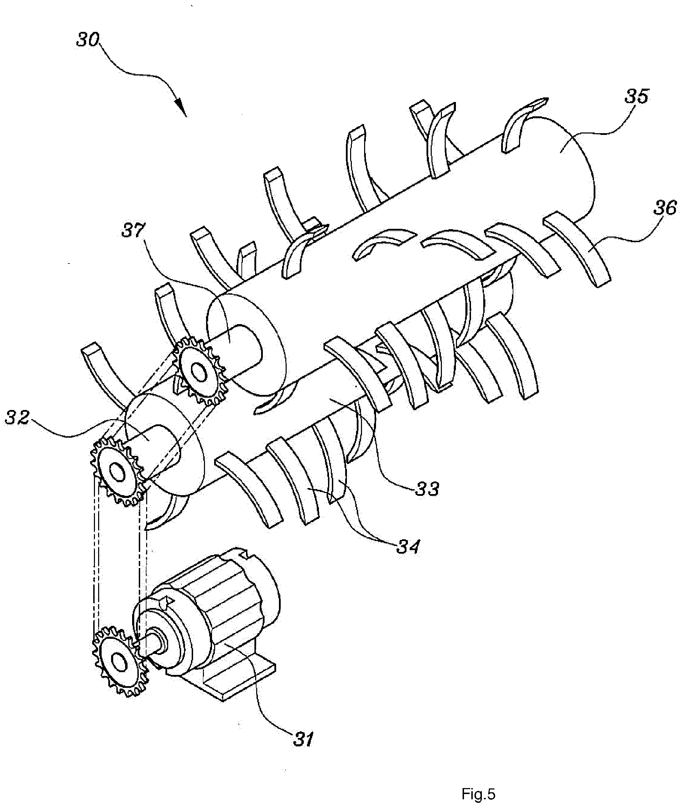

FIG. 5 is a perspective view illustrating a plastic ripper and separator that tears and removes plastic materials from raw waste, the plastic ripper and separator being used in the method for manufacturing biomass pellets according to the present invention;

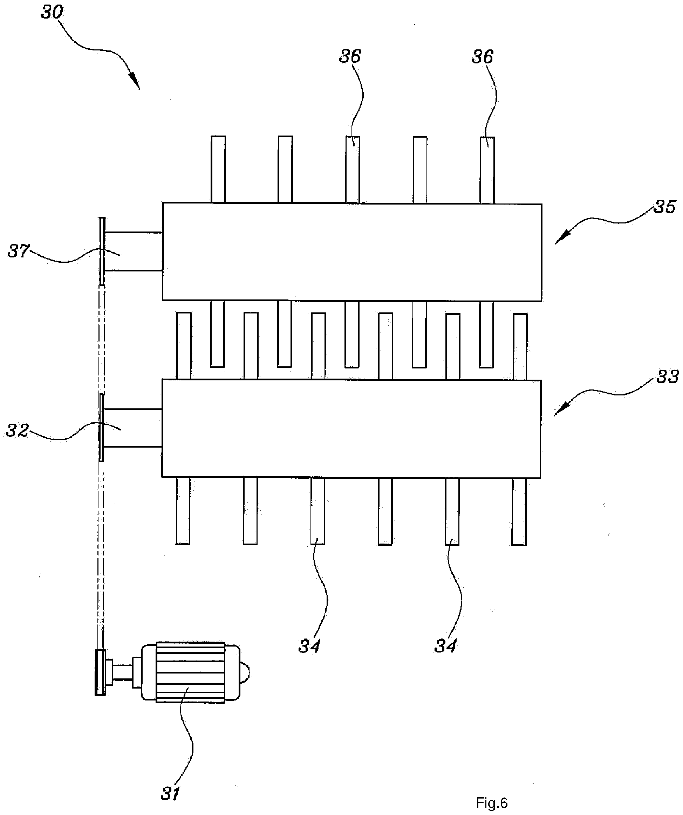

FIG. 6 is a plan view illustrating the plastic ripper and separator;

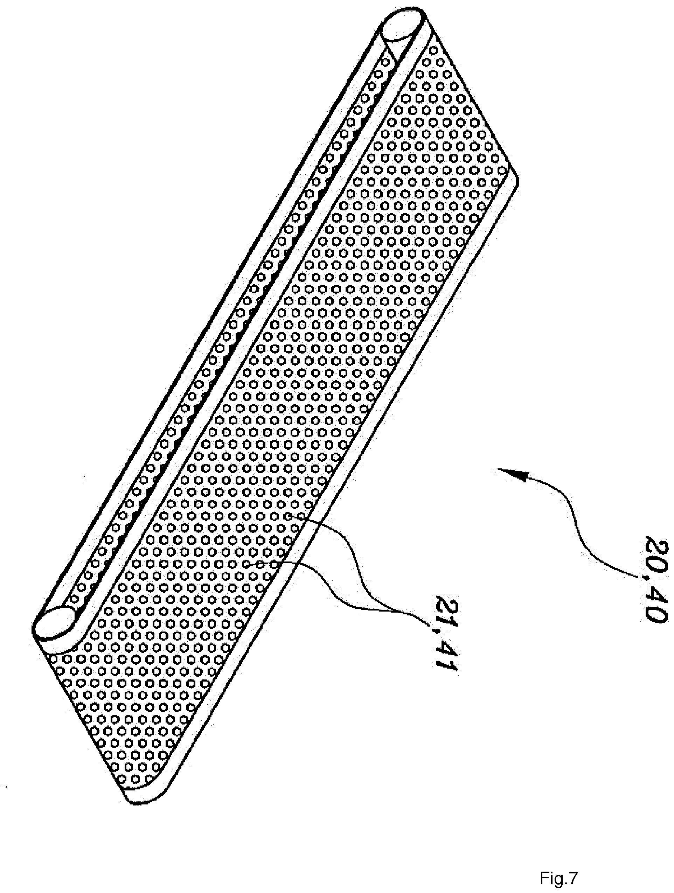

FIG. 7 is a diagram illustrating a first conveyer belt and a second conveyer belt that have ventilation holes through which air blown by an air blower can pass through;

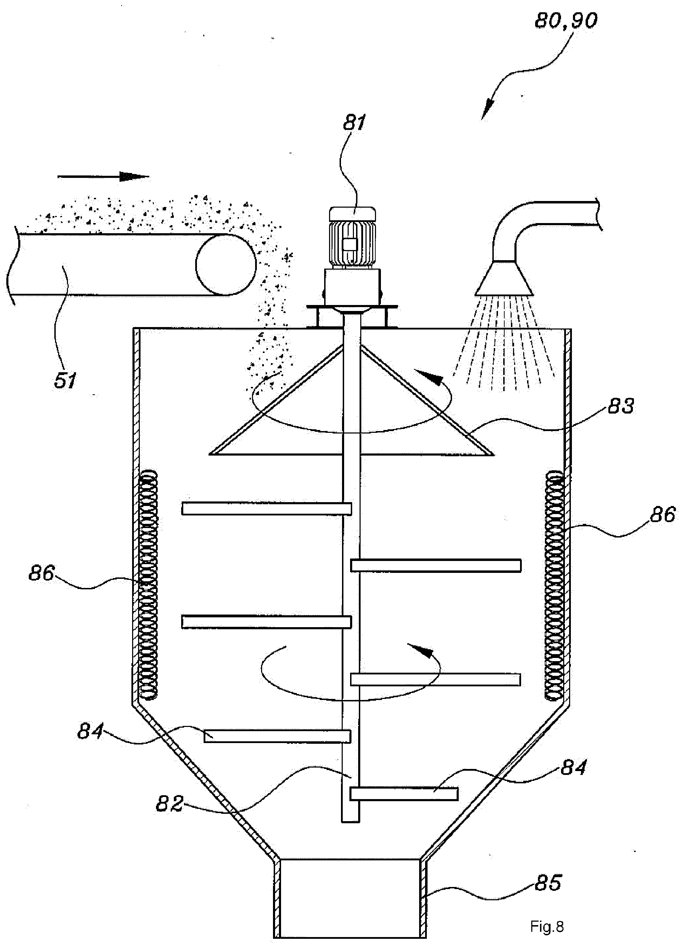

FIG. 8 is a cross-sectional view illustrating a mixer and stirrer used in the method for manufacturing biomass pellets according to the present invention; and

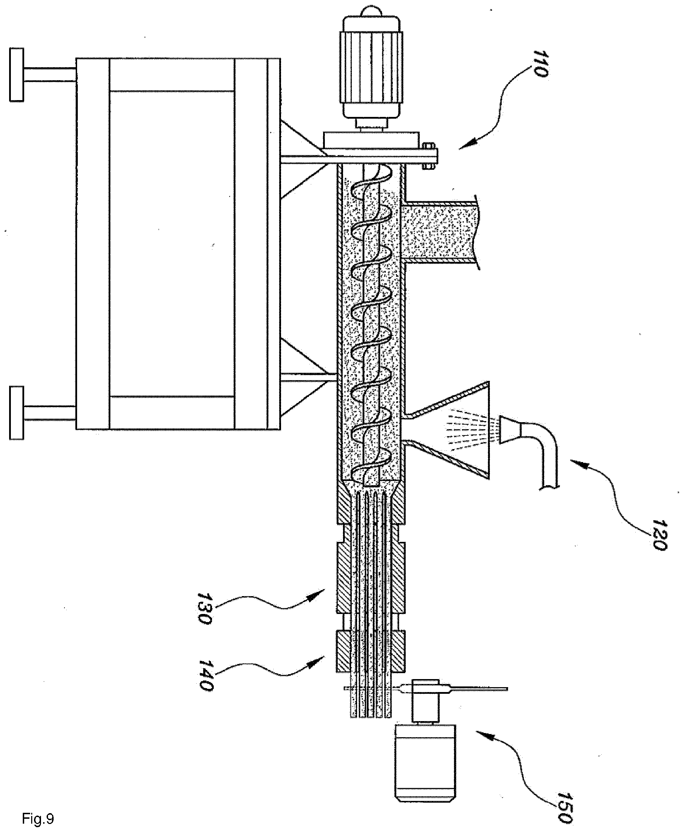

FIG. 9 is a diagram illustrating an extruder that extrudes and cuts semi-finished biomass products to obtain biomass pellets having a predetermined size.

### Best Mode

The present invention provides a separation process for removing scrap metals and plastic waste from raw waste and provides a method and system for manufacturing biomass pellets using the metal-free and plastic-free waste obtained through the separation process.

### Mode for Invention

A system for manufacturing biomass pellets according to one embodiment of the present invention includes a separation unit that removes scrap metals and plastic waste from raw waste (hereinbelow, referred to as biomass) and a pellet manufacturing unit that manufactures biomass pellets using waste from which scrap metals and plastic waste are removed by the separation unit.

Hereinbelow, a method for manufacturing biomass pellets according to one embodiment of the present invention will be first described.

Raw waste, containing waste wood, used clothes, scrap paper, waste synthetic resin, food waste, plastic bags that are commonly used to hold food waste, plastic waste, and scrap metals, is transported along a first conveyer belt. During transportation of the raw waste, scrap metals included in the raw waste are removed (removing of scrap metals, Step S10).

Next, plastic materials such as plastic waste and plastic bags that are commonly used to hold all kinds of waste are removed during the transportation of the raw waste along the first conveyer belt after Step S10 (ripping and removing of plastic material, Step S20).

The remainders that remain after Step S20 (ripping and removing of plastic material) are primarily pulverized into waste particles having a predetermined size (pulverizing, Step S30).

At Step S30, a first waste group (inorganic waste) composed of waste wood, used clothes, scrap paper, and waste synthetic resin among the primarily pulverized waste particles is secondarily pulverized to have a size of about 10 cm. A portion of the secondarily pulverized first waste group is set aside for preparation of a biomass mixture. The prepared first waste group accounts for about 10 wt% (with respect to the total amount of final products). A portion of a second waste group (organic waste) composed of food waste, bones, furs, human excrement, and animal excrement among the primarily pulverized waste particles is set aside for preparation of the biomass mixture. The prepared second waste group accounts for about 30 wt% (with respect to the total amount of final products). The prepared first waste group is mixed with the prepared second waste group to obtain a first mixture (first mixing, Step S40).

The first mixture is heated to 80°C and stirred during the heating using a steam heater (first stirring, Step S50).

Coal and graphite in an amount of 50 wt% (with respect to the total amount of final products) and red clay in an amount of 10 wt% (with respect to the total amount of final products) are mixed to prepare an additive (second mixing, Step S60).

The additive is added to the first mixture, and the additive and the first mixture are stirred together to be well mixed with each other, thereby obtaining a second mixture (second stirring, Step S70).

Asphalt heated to 100°C is added to the second mixture to obtain the biomass mixture (asphalt addition, Step S80).

The biomass mixture obtained through Step S80 is extruded using an extruder. At this point, a deasphalted oil mixture composed of graphite and deasphalted oil is applied to the biomass mixture, which is extruded, at a front end portion of an extrusion die (extrusion of biomass mixture and application of deasphalted oil mixture, Step S90).

A coating agent composed of asphalt and coal is coated on the surface of the extruded biomass mixture (coating, Step 100).

The coated biomass mixture is injected into a mold so that the coated biomass mixture is molded to have a predetermined form (molding, Step S110).

The molded biomass mixture is cut into pellets (cutting, Step S120), thereby obtaining biomass pellets.

At Step S10 (removing of scrap metals), raw waste supplied from a hopper 10 is transported along the first conveyer belt 20. At this point, the raw waste passes under a scrap metal separator 70 arranged above a front end portion of the first conveyer belt 20 so that scrap metals are removed from the raw waste. The scrap metal separator 70 may be a magnetic body. Therefore, scrap metals included in the raw waste are attracted to the scrap metal separator 70 due to magnetic force. Through this process, scrap metals are removed from the raw waste.

The scrap metal-free raw waste, which remains after Step S10 (removing of scrap metals) is performed, may contain waste wood, food waste, plastic bags used to hold food waste, and other plastic waste. To manufacture biomass pellets according to the present invention, plastic materials such as plastic bags or plastic waste have to be removed from the raw waste.

In order to remove the plastic materials, a plastic ripper and separator 30 is arranged at a rear end portion of the first conveyer belt 20. The plastic ripper and separator 30 rips and removes plastic bags or plastic waste at Step S20 (ripping and removing of plastic material).

In Korea, food waste is commonly packed in a plastic bag when it is discharged from households or restaurants. The plastic ripper and separator 30 rips the plastic bags in which food waste is contained so that the food waste can pour out of the plastic bags. At this point, plastic bags and plastic waste are also removed by the plastic ripper and separator 30.

In order to facilitate removal of plastic materials at Step S20 (ripping and removing of plastic material), an air blower is arranged under the first conveyer belt 20, thereby floating the plastic materials in the air. Preferably, the first conveyer belt 20 may have a plurality of ventilation holes through which air blown by the air blower passes through. In this way, the plastic materials can be easily removed.

The metal-free and plastic-free raw waste obtained through Step S20 (ripping and removing of plastic material) may be sorted into inorganic waste and organic waste by an organic-and-inorganic waste sorter (Step S21).

The organic-and-inorganic waste sorter sorts the metal-free and plastic-free raw waste obtained through Step S20 into organic waste including food waste, human and animal excrement, and inorganic waste including waste wood, scrap paper, and waste synthetic resin. The inorganic waste is transported to the front end portion of the first conveyer belt 20 and is then pulverized into particles by a pulverizer 50 arranged at the front end of the first conveyer belt 20 at Step S30 (pulverizing).

At Step S30 (pulverizing), the inorganic waste is pulverized into particles with a size of 10 cm or smaller. At Step S40 (first mixing), the pulverized inorganic waste is prepared to account for 10 wt% with respect to the total amount of final products). The organic waste containing food waste, pulverized bone chips, furs, human excrement, and animal excrement is prepared to account for 30 wt% with respect to the total amount of final products.

At Step S50 (first stirring), the first mixture obtained through Step S40 (first mixing) is heated to 80°C and stirred in the steam heater. As the first mixture undergoes the heating and stirring performed by the steam heater, particles in the first mixture are well agglomerated together.

At Step S60 (second mixing step), an additive composed of 50 wt% of coal and graphite and 10 wt% of red clay is added to the first mixture that is stirred through Step S50 (first stirring) to obtain a second mixture. Addition of the additive to the first mixture facilitates agglomeration of ingredients in the first mixture that is obtained through Step S50 (first stirring).

At Step S70 (second stirring), the second mixture is heated to 80°C and stirred to be well blended during the heating. At Step S80 (asphalt addition), asphalt of 100°C is added to the second mixture obtained through Step S70 to produce a biomass mixture.

Step S90 (extrusion of biomass mixture and application of deasphalted oil) is a process for extruding the biomass mixture to which asphalt is added and for applying a deasphalted oil mixture composed of graphite (and coal) and deasphalted oil to the surface of the extruded biomass mixture at the front end portion of the extrusion die. When the deasphalted oil is mixed with graphite and coal particles, the graphite and coal particles are adhered to each other to become a viscous mixture. The deasphalted oil mixture (viscous mixture) is supplied to the front end portion of the extrusion die so that the surface of the extruded biomass mixture is coated with the viscous material.

At Step S100, coating is a process for coating the surface of the extruded biomass mixture obtained from Step 90 with the coating agent composed of asphalt and coal. The coating agent is in a gel state.

At Step S110, the extruded biomass mixture coated with the gel-state coating agent is injected into a mold arranged at the front end of the extrusion die so that the biomass mixture is molded to have a predetermined form. Here, the mold may be configured to have a various shape.

At Step S120, the molded biomass mixture obtained from Step 110 is cut into pellets having a predetermined size.

Next, a system for manufacturing biomass pellets according to the above-described manufacturing method will be described. The system for manufacturing biomass pellets includes: a hopper 10 into which raw waste is charged; a first conveyer belt 20 that transports raw waste supplied from the hopper 10; a scrap metal separator 70 that is arranged above a front end portion of the first conveyer belt 20 to remove scrap metals from raw waste; a plastic ripper and separator 30 that is arranged above a rear end portion of the first conveyer belt 20 to remove plastic materials from the raw waste; a second conveyer belt 40 that transports the waste that falls from the rear end of the first conveyer belt 20; a pulverizer 50 arranged at a rear end portion of the second conveyer belt 40; a first mixer and stirrer 80 that mixes and stirs waste wood, used clothes, scrap paper, waste synthetic resin, and food waste to obtain a first mixture; a second mixer and stirrer 90 that mixes an additive composed of graphite, coal, and red clay with the first mixture to obtain a second mixture; an asphalt injector 100 that injects asphalt to the second mixture composed of the first mixture and the additive to prepare a biomass mixture; an extruder 110 that extrudes the biomass mixture; a deasphalted oil mixture injector 120 that is arranged at a front end of the extruder 110 and applies an deasphalted oil mixture composed of graphite and deasphalted oil to the biomass mixture extruded by the extruder 110; a coater 130 that coats the surface of the biomass mixture that has been extruded by the extruder 110 and mixed with the deasphalted oil mixture, with a coating agent composed of asphalt and coal; a mold 140 that has a predetermined shape and into which the biomass mixture coated with the coating agent is injected so that the biomass mixture can be molded to have a predetermined form; and a cutter 150 that cuts the molded biomass mixture into pellets having a predetermined size.

Various kinds of waste are collected and then charged into the hopper 10. The collected raw waste may include waste wood, used clothes, scrap paper, waste synthetic resin, food waste, and plastic bags used to pack food waste, plastic waste, and scrap metals. The biomass pellets obtained through the manufacturing method according to the present invention must not include scrap metals and plastic materials. Therefore, the collected raw waste undergoes a separation process in which scrap metals and plastic materials are removed from the collected raw waste.

For the purpose of removing scrap metals, the scrap metal separator 70 that removes scrap metals included in the raw waste is arranged at the front end of the first conveyer belt 20 to which the collected raw waste is supplied from the hopper 10. The first conveyer belt 20 is used to transport the raw waste supplied from the hopper 10. The scrap metal separator 70 may be a magnetic body so that scrap metals included in the raw waste are attracted and attached to the scrap metal separator 70 due to the magnetic force when the raw waste is transported along the first conveyer belt 20.

The raw waste that has undergone the scrap metal removing process performed by the scrap metal separator 70 is likely to include plastic materials such as plastic bags that are used to hold food waste. The plastic materials have to be removed from the raw waste.

For the purpose of removing plastic materials, the plastic ripper and separator 30 is arranged above the rear end portion of the first conveyer belt 20. The plastic ripper and separator 30 includes: a driving motor 31; a ripper 33 including a rotational shaft 32 rotated by the driving motor 31 and a plurality of hook-shaped blades 34 arranged on a surface of the rotational shaft 32; and a separator 35 including a driven shaft 37 and a plurality of separating blades 36 arranged on a surface of the driven shaft to move between the hook-shaped blades 34 of the ripper 33. The rotational shaft 32 of the ripper 33 and the driven shaft 36 of the separator 35 are linked to each other via a belt-pulley system or a sprocket chain serving as a driving force transmission means so as to be interlockingly rotated by the driver motor 31.

The hook-shaped blades 34 of the ripper 33 poke into and rip plastic bags that contain food waste therein and that are transported along the first conveyer belt 20 so that the food waste comes out of the plastic bags. The ripped plastic bags are caught and lifted by the hook-shaped blades 34. The ripped plastic bags stuck between the hook-shaped blades 34 are scraped and discharged by the separating blades 36. The discharged ripped plastic bags are collected after being transported along a plastic material discharge conveyer belt 38.

The metal-free and plastic-free waste that has been transported to reach the rear end portion of the first conveyer belt 20 is transported to the second conveyer belt 40 via a bridging conveyer belt 22 and an inclined guide member 23. The first conveyer belt 20, the bridging conveyer belt 22, and the second conveyer belt 40 are arranged in this order, with a predetermined height difference from each other. The inclined guide member 23 serving as a ramp is arranged between the bridging conveyer belt 22 and the second conveyer belt 40. Therefore, the waste that reaches the rear end portion of the first conveyer belt 20 falls from the first conveyer belt 20 to the bridging belt 22 and is then transported along the bridging conveyer belt 22 to reach a rear end portion of the bridging conveyer belt 22. Then, the metal-free and plastic-free waste transported to the rear end portion of the bridging conveyer belt 22 slips down along the surface of the inclined guide member 23. There is a height difference between a lower end of the inclined guide member 23 and a front end of the second conveyer belt 40. Therefore, the waste hits against the surface of the second conveyer belt 40 when it falls to the second conveyer belt 40.

Preferably, an air blower 60 is arranged under the rear end portion of the first conveyer belt 20 and an air blower 60 is arranged under the front end portion of the second conveyer belt 40. Air that is supplied by the air blower 60 arranged under the first conveyer belt 20 causes the plastic materials that are included in the waste transported along the first conveyer belt 20 and that are ripped by the plastic ripper and separator 30 to float in the air, thereby enabling the plastic materials to be easily caught by the hook-shaped blades 34 of the ripper 33. In addition, the air supplied by the air blower 60 arranged under the second conveyer belt 40 is blown into the waste that falls to the second conveyer belt 40 so that the waste is expanded.

The first and second conveyer belts 20 and 40 may have multiple ventilation holes 21 and 41 through which air supplied by the air blowers 60 passes.

The waste transported to the second conveyer belt 40 is introduced into the pulverizer 50 arranged at the rear end of the second conveyer belt 40. In the pulverizer 50, the waste is pulverized into waste particles with a predetermined size. Among the waste particles, a first waste group (inorganic waste) including waste wood, used clothes, scrap paper, and waste synthetic resin is pulverized to have a size of about 10 cm. The pulverized first waste group is prepared to account for 10 wt% with respect to the total amount of final products. The 10 wt% of the pulverized first waste group is introduced into the first mixer and stirrer 80 along a transportation conveyer belt 51 arranged at the rear end of the pulverizer 50. On the other hand, among the waste particles, a second waste group (organic waste) including food waste, bones, furs, human excrement, and animal excrement is prepared to account for 30 wt% with respect to the total amount of final products. The 30 wt% of the second waste group is also introduced into the first mixer and stirrer 80.

The first mixer and stirrer 80 has the same structure as the second mixer and stirrer 90. Therefore, only the structure of the first mixer and stirrer 80 will be described below. The first mixer and stirrer 80 includes a motor 81 arranged at the top of a housing, a shaft 82 that extends downward from the motor 81 to be installed in the housing and to be rotated by motor 81, a conical rotating plate 83 that has a triangular cross section and is engaged with the shaft 82, a plurality of rotating plates 84 engaged with the shaft 82 and arranged under the conical rotating plate 83, and a damper 85 installed at a lower end of the housing. The lower end of the housing can be opened and closed using the damper 85.

The waste particles introduced into the first mixer and stirrer 80 may be roughly categorized into a food waste group and a general waste group. The food waste group may include food waste, bone chips, furs, human excrement, and animal excrement. The general waste group may include waste wood, used clothes, scrap paper, and waste synthetic resin. Herein, the food waste group is called organic waste and the general waste group is called inorganic waste.

The organic waste introduced into the first mixer and stirrer 80 accounts for 30 wt% with respect to the total amount of final products.

The inorganic waste sorted by the organic-and-inorganic waste sorter 71 is cut into particles with a size of 10 cm and then pulverized or ground. The inorganic waste introduced into the first mixer and stirrer 80 accounts for 10 wit% with respect to the total amount of final products.

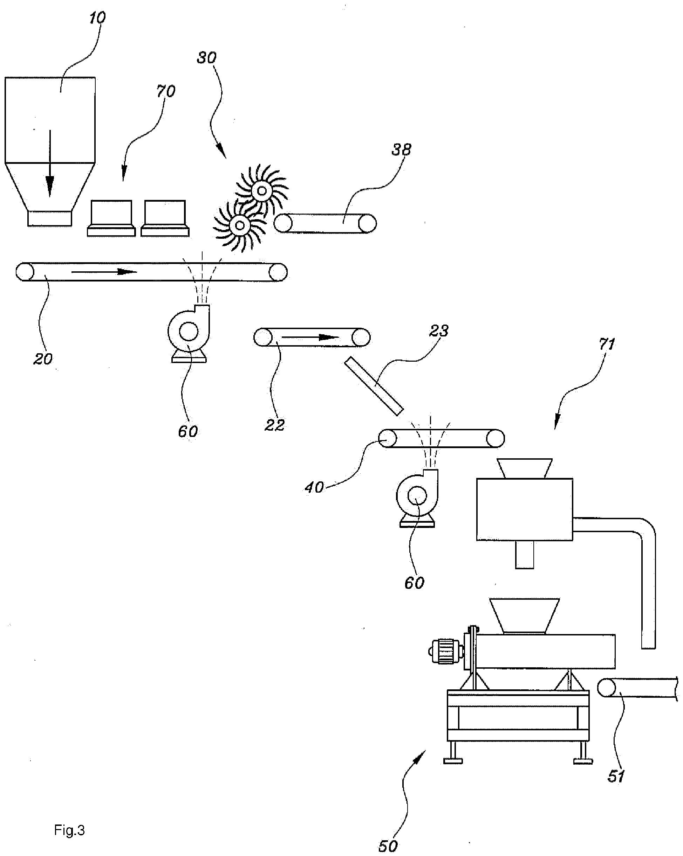

The transportation conveyer belt 51 connected to the first mixer and stirrer 80 is used to transport the inorganic waste that is sorted by the organic-and-inorganic waste sorter 71, and the organic waste sorted by the organic-and-inorganic waste sorter 71 is transported along a different transportation line. The inorganic waste and the organic waste that are weighed to account for their proportions determined according to a predetermined mixing ratio, and the predetermined amounts of inorganic waste and organic waste are transported to an upper end of the first mixer and stirrer 80 or to an upper surface of the transportation conveyer belt 51 to be finally introduced into the first mixer and stirrer 80 (see FIG. 3).

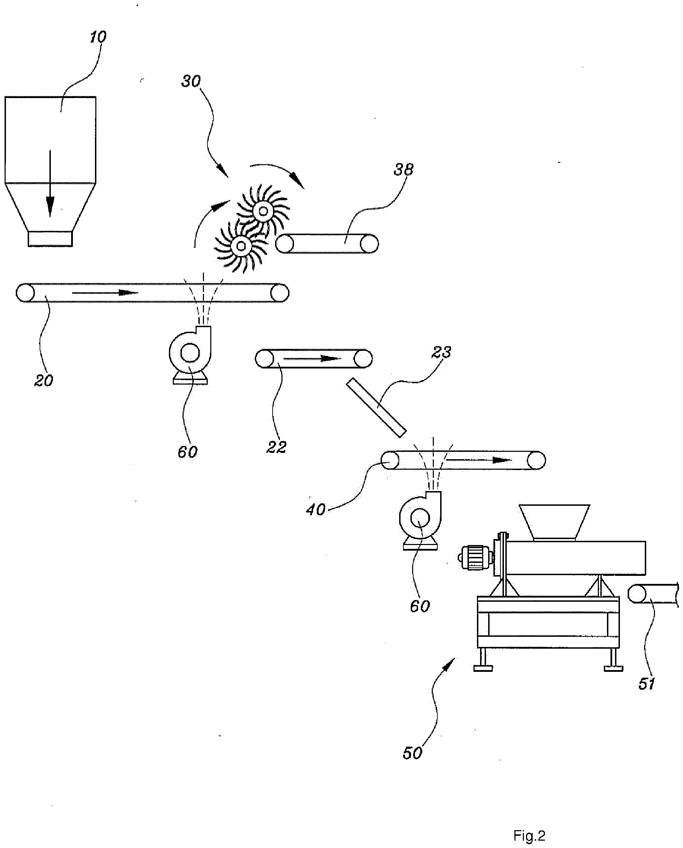

On the other hand, as illustrated in FIG. 2, the organic waste and the inorganic waste may be collectively introduced into the first mixer and stirrer 80. In this case, raw waste is not sorted into organic waste and inorganic waste by the organic-and-inorganic waste sorter 71. Therefore, before raw waste is charged into the hopper 10, an amount of food waste group and an amount of general waste group are preliminarily weighed to account for their proportions determined according to a predetermined mixing ratio. That is, a predetermined amount of food waste group and a predetermined amount of the general waste group are charged into the hopper 10.

Alternatively, waste can be introduced into the first mixer and stirrer 80 via a duct. A method for charging waste into the first mixer and stirrer 80 may be appropriately selected according to working environments and conditions.

When the inorganic waste (general waste group) and the organic waste (food waste group) are introduced into the first mixer or stirrer 80, the motor 81 rotates the shaft 82 so that the conical rotating plate 80 rotates, thereby dispersing the waste introduced into the first mixer and stirrer 80.

Next, the waste is mixed by the rotating plates 84 that are engaged with the shaft 82 and arranged at intervals. The mixed waste is discharged out of the first mixer and stirrer 80 by opening the damper 85. The waste that is discharged out of the first mixer and stirrer 80 is called the first mixture.

Preferably, the inside of the first mixer and stirrer 80 is heated to a temperature of 80°C using a steam heater 86. The first mixture is heated and stirred in the first mixer and stirrer 80.

The first mixture mixed by the first mixer and stirrer 80 is transported to the second mixer and stirrer 90 by a transportation means such as a conveyer belt 87.

The second mixer and stirrer 90 has the same structure as the first mixer and stirrer 80. Therefore, elements of the second mixer and stirrer 90 are denoted with the same reference numbers as those of the first mixer and stirrer 80. The second mixer and stirrer 90 includes a motor 81, a shaft 82, a conical rotating plate 83, a plurality of rotating plates 84, and a damper 85.

The first mixture that is mixed and stirred by the first mixer and stirrer 80 is transported by the conveyer belt 87 to be introduced into the second mixer and stirrer 90. The additive composed of 50 wt% of graphite and coal and 10 wt% of red clay is transported by another transportation means to be introduced into the second mixer and stirrer 90.

After the first mixture, mixed and stirred by the first mixer and stirrer 80, and the additive (graphite, coal, and red clay) are separately transported to the second mixer and stirrer 90, the conical rotating plate 83 and the rotating plates 84 are rotated by the motor 81 so that the first mixture and the additive are mixed and stirred to be well blended with each other.

Due to the presence of graphite, coal, and red clay, the particles of the first mixture can be effectively agglomerated.

Preferably, the inside of the second mixer and stirrer 90 is also heated to 80° or higher by the steam heater 86 during the mixing and stirring. The mixture discharged out of the second mixer and stirrer 90 is called the second mixture.

In addition, asphalt is added to the second mixture discharged out of the second mixer and stirrer 90. Specifically, the second mixture discharged out of the second mixer and stirrer 90 falls onto a screw 101 arranged under the second mixture and stirrer 90, and asphalt is added to the second mixture on the screw 101.

Asphalt is generally used for road construction as a road paving material. It is an expensive material and is difficult to manufacture. During production of asphalt, a considerable amount of energy is needed to heat liquid asphalt and to maintain an elevated temperature of the liquid asphalt. Hot Mix Asphalt (HMA) is a generic term for asphalt mixtures. HMA is generally produced by heating a binder to decrease the viscosity of liquid asphalt and heating aggregate to reduce the water content before the aggregate is mixed with the liquid asphalt. When asphalt is contained in a vessel that is not heated, the asphalt is cured to be solidified. In order to heat solidified asphalt so that the asphalt can melt to be mixed with aggregate, energy is consumed.

Pure asphalt can be mixed with aggregate at a temperature of about 300°F (about 150°C), polymer modified asphalt at 330°F (about 165°C), and asphalt cement at 200°F (about 95°C). Pavement and compression of asphalt are performed when asphalt is heated to maintain a desired temperature.

Asphalt concrete used as a road paving material may include aggregate or filler that is generally well-ground fine powder. The aggregate or filler in asphalt concrete may have any form. In addition, the kind of aggregate and filler may be determined according to grade, strength, roughness, and stability of asphalt concrete serving as a road paving material.

The aggregate may include various materials having different sizes and shapes. For example, the aggregate may include lime, quick lime, sand, gravel, pebbles, slag, or recycled concrete. One example of the aggregate may be mineral filler that is fine powder of an inert material, which is added to asphalt (HAM) to increase density and strength of asphalt concrete.

Examples of mineral filler include crushed rock, slag powder, slaked lime, hydraulic cement, fly ash, and fiber.

The asphalt supplied by the asphalt injector 100 may be an asphalt mixture that can be used as a road paving material. The asphalt is added to the second mixture that is discharged out of the second mixer and stirrer 90. This process increases mixing capability and heat efficiency of the second mixture.

The asphalt may be preferably maintained at a temperature of 100°C when it is added to the second mixture.

The extruder 110 is an apparatus for extruding the asphalt-added second mixture. The asphalt-added second mixture is solidified while being extruded. The extruder 110 may be any existing extruder as long as it can extrude the prepared mixture described above. Therefore, a description on details of the extruder 110 is not given below.

The second mixture is solidified when it is extruded by the extruder 110. During the extrusion, a deasphalted oil mixture composed of graphite and deasphalted oil is applied to the extruded second mixture by the deasphalted oil mixture injector 120.

When deasphalted oil and graphite are mixed, the deasphalted oil and graphite adhere to each other. Therefore, a viscous mixture composed of deasphalted oil and graphite can be supplied to a front portion of the extruder. The viscous mixture composed of deasphalted oil and graphite is coated on the surface of the extruded and solidified second mixture, thereby producing a biomass mixture (raw material for biomass pellets).

Next, the biomass mixture passes through the coater 130 arranged at the front end of the extruder 110 so that the biomass mixture is coated with a coating agent.

The coating agent may be a mixture composed of asphalt and coal.

The coater 130 has an inlet 131 through which the coating agent composed of asphalt and coal is supplied, and helical grooves formed in the inside surface of its body. Therefore, when the biomass mixture passes through the coater 130, the biomass mixture can be coated with the coating agent supplied through the inlet 131 and the helical grooves.

Alternatively the coater 130 may not have the helical grooves in the inside surface thereof but may be filled with the coating agent that is supplied through the inlet 131. In this state, the biomass mixture passes through the coater 130 so that the biomass mixture can be coated with the coating agent.

The structure of the coater 130 may vary according to working conditions and environments.

The biomass mixture coated with the coating agent is introduced into a mold 140 installed at a front end of the coater 130. Therefore, the biomass mixture is molded to have a predetermined form according to the shape of the mold.

The shape of the molded biomass mixture may vary according to the shape of the mold 140.

A cutter 150 installed at a front end of the mold 140 cuts the biomass mixture that is discharged out of the mold into pellets having a predetermined size. Thus, finished biomass pellets are finally obtained.

### Industrial Applicability

The present invention is applied to a system and method for manufacturing biomass pellets using biomass that includes food waste collected from households or restaurants, human and fowl excrement, and waste wood. The present invention provides a system and method for manufacturing biomass pellets using biomass obtained by removing scrap metals and plastic materials such as plastic waste and plastic bags that are used to pack all kinds of waste and food waste. The present invention has good industrial applicability because it can recycle various kinds of waste (organic waste and inorganic waste) generated by industries and households as an energy source.

## Claims

1. A method for manufacturing biomass pellets, comprising:
(Step S10) removing scrap metals from raw waste including waste wood, used clothes, scrap paper waste synthetic resin, food waste, plastic bags used to hold food waste, plastic waste, and the scrap metals when the raw waste is transported by a first conveyer belt;
(Step S20) removing plastic materials such as the plastic waste and plastic bags used to hold food waste from the raw waste that is transported by the first conveyer belt after the scrap metals have been removed;
(Step S30) pulverizing the raw waste that remains after the plastic materials have been removed into waste particles;
(Step S40) pulverizing, among the waste particles, inorganic waste including waste wood, used clothes, scrap paper, or waste synthetic resin at an interval of 10 cm, preparing the inorganic waste by an amount of 10 wt% with respect to a total amount of biomass pellets, preparing organic waste food waste, bone chips, furs, human excrement, and animal excrement by an amount of 30 wt% with respect to the total amount of the biomass pellets, and mixing the inorganic waste with the organic waste to obtain a first mixture;
(Step S50) heating and stirring the first mixture at 80°C within a steam heater;
(Step S60) adding 50 wt% of coal and graphite with respect to the total amount of the biomass pellets and 10 wit% of red clay with respect to the total amount of the biomass pellets to the first mixture to obtain a second mixture;
(Step S70) mixing and stirring the second mixture;
(Step S80) adding asphalt heated to 100°C to the second mixture and mixing the asphalt and the second mixture with each other;
(Step S90) extruding the asphalt-added second mixture using an extruder and applying a deasphalted oil mixture composed of deasphalted oil and graphite to the extruded second mixture at a front end portion of an extrusion die;
(Step S100) coating a coating agent composed of asphalt and coal on a surface of the extruded second mixture to which the deasphalted oil mixture is applied, to obtain a biomass mixture serving as raw material for the biomass pellets;
(Step S110) causing the biomass mixture to be introduced into a mold so that the biomass mixture is molded to have a predetermined form; and
(Step S120) cutting the molded biomass mixture into pellets having a predetermined size.

2. The method for manufacturing biomass pellets according to claim 1, wherein the pulverized waste particles are sorted into the organic waste and the inorganic waste by an organic-and-inorganic waste sorter,
a transportation conveyer belt (51) connected to a first mixer and stirrer (80) transports the inorganic waste,
the organic waste is transported by an additional transportation conveyer belt,
a first predetermined amount of the organic waste and a second predetermined amount of the inorganic waste that are determined according to a predetermined mixing ratio are separately introduced into the first mixer and stirrer (80) or put on the transportation conveyer belt (51) to be supplied to the first mixer and stirrer (80).

3. The method for manufacturing biomass pellets according to claim 1, wherein an air blower is arranged under the first conveyer belt to float the plastic materials in the air at Step 520.

4. The method for manufacturing biomass pellets according to claim 1, further comprising:
sorting the raw waste that has undergone Step S20 into organic waste including food waste and excrement, and inorganic waste including waste wood, scrap paper, and waste synthetic resin (Step S21).

5. A system for manufacturing biomass pellets, comprising:
a hopper (10) into which raw waste is charged;
a first conveyer belt (20) that transports raw waste supplied from the hopper (10);
a scrap metal separator (70) that is arranged above an front end portion of the first conveyer belt (20) to remove scrap metals from the raw waste;
a plastic ripper and separator (30) that is arranged above a rear end portion of the first conveyer belt (20) to rip and remove plastic materials;
a second conveyer belt (40) that receives waste falling from the rear end portion of the first conveyer belt (20) and transports the received waste;
a pulverizer (50) arranged at a rear end of the second conveyer belt (40);
a first mixer and stirrer (80) that mixes and stirs a waste mixture including waste wood, used clothes, scrap paper, waste synthetic resin, and food waste to obtain a first mixture;
a second mixer and stirrer (90) that mixes graphite, coal, and red clay with the first mixture discharged out of the first mixer and stirrer (80) to obtain a second mixture;
an asphalt injector (100) that supplies asphalt to the second mixture discharged out of the second mixer and stirrer (90) ;
an extruder (110) that extrudes the second mixture to which the asphalt is added;
a deasphalted oil mixture injector (120) that supplies a deasphalted oil mixture composed of graphite and deasphalted oil to a front end portion of the extruder (110), to obtain a biomass mixture;
a coater (130) that coats a surface of the biomass mixture with a coating agent composed of asphalt and coal;
a mold (140) into which the biomass mixture, which is discharged out of the coater (130), is injected so that the biomass mixture is molded to have a predetermined form; and
a cutter (150) that cuts the biomass mixture discharged out of the mold (140) into pellets having a predetermined size.

6. The system for manufacturing biomass pellets according to claim 5, wherein the scrap metal separator (70) may include a magnetic body.

7. The system for manufacturing biomass pellets according to claim 5, wherein the plastic ripper and separator (31) includes: a driving motor (31); a ripper (33) including a rotational shaft (32) driven by the driving motor (31) and a plurality of hook-shaped blades (34) arranged on a surface of the rotational shaft (32); and a separator (35) including a driven shaft (37) and a plurality of separating blades (36) arranged on a surface of the driven shaft (37) to move between the hook-shaped blades (34), and
wherein the rotational shaft (32) and the driven shaft (37) are linked to each other via a belt or chain serving as a driving force transmission means so as to be interlockingly rotated.

8. The system for manufacturing biomass pellets according to claim 7, wherein the plastic materials stuck between the hook-shaped blades (34) of the ripper (33) are scraped and discharged outside by the separating blades (36) of the separator (35), and the discharged plastic materials are transported by a plastic material discharge conveyer belt to be collected.

9. The system for manufacturing biomass pellets according to claim 5, wherein the first conveyer belt (20), a bridging conveyer belt (22), and the second conveyer belt (40) are arranged in this order, with a height difference from each other.

10. The system for manufacturing biomass pellets according to claim 9, further comprising an inclined guide member (23) serving as a ramp that is installed between the bridging conveyer belt (22) and the second conveyer belt (40).

11. The system for manufacturing biomass pellets according to claim 5, wherein air blowers (60) are arranged under the rear end portion of the first conveyer belt (20) and the front end portion of the second conveyer belt (40), respectively.

12. The system for manufacturing biomass pellets according to claim 11, wherein the first conveyer belt (20) is provided with a plurality of ventilation holes (21) and the second conveyer belt (40) is provided with a plurality of ventilation holes (41).

13. The system for manufacturing biomass pellets according to claim 5, wherein an inside surface of the coater (130) is provided with helical grooves.

14. The system for manufacturing biomass pellets according to claim 5, further comprising an organic-and-inorganic waste sorter (71) that sorts the waste particles transported by the second conveyer belt (40) into organic waste and inorganic waste,
wherein the organic waste is transported to the transportation conveyer belt (51) to be introduced into the first mixer and stirrer (80), and
wherein the inorganic waste is transported to the pulverizer (50) so that the inorganic waste is pulverized by the pulverizer (50) before being introduced into the first mixer and stirrer (80).
